# EUROPEAN PATENT APPLICATION

(11) **EP 1 736 815 A2**
(43) Date of publication of application: **27.12.2006**
(21) Application number: 06017864.7
(22) Date of filing: 17.05.2002
(51) Int. Cl.: G02C 9/00

(54) **Spectacles set with detachable shelter frame**

(62) Divisional of application: 02011004.5
(71) Applicant: Xie, Yiling, El Monte, CA 91731 (US)
(72) Inventor: Xie, Yiling, El Monte, CA 91731 (US)
(74) Representative: Casalonga, Axel

(57) **Abstract**

A spectacles set comprises a primary spectacle frame (10') and a detachable shelter frame constructed for mounting in front of said primary spectacle frame. The detachable shelter frame comprises a shelter frame (21') for supporting two auxiliary lenses (221', 222') and a pair of supporting arms (241', 251') provided at two inner sides of said auxiliary lenses (221', 222') for mounting said shelter frame (10) in front of said primary spectacle frame (20). Each of said supporting arms (241', 251') comprises a riding body (2411', 2512') having resilient ability, extending rearwardly from said inner side of said respective auxiliary lens (221', 222') of said shelter frame (21') for riding on said primary spectacle frame (10'); and a mounting body (2412', 2512') which is connected to said riding body (2411', 2511') for pressing against a rear side of said primary spectacle frame (10') in such a manner that said two riding bodies (2411', 2511') substantially pull said two mounting bodies (2412', 2512') towards said primary spectacle frame so as to to securely mount said shelter frame in front of said primary spectacle frame (10').

## Description

### Background of the Present Invention

### Field of Invention

The present invention relates to spectacle frame, and more particularly to a spectacles set, which comprises a detachable shelter frame adapted for mounting on a primary spectacle frame by means of magnetic attraction.

### Description of Related Arts

Shelter frames are widely used today. A conventional shelter frame, such as clip-on sunglasses, comprises a plurality of clipping claws for detachably mounted on a shortsighted or farsighted sunglasses so that the wearer does not need to carry and pay for another pair of shortsighted or farsighted sunglasses. However, the metal made clipping claws may scratch the lenses of the primary eyeglasses during the attaching operation. Also, the wearer requires both hands to align and engage the conventional clip-on sunglasses on the primary eyeglasses in correct position. It is troublesome and dangerous for a wearer to use his or her both hands to wear such clip-on sunglasses on the regular glasses while he or she is driving.

In order to solve the problem of the above mentioned clip-on sunglasses, magnetic attachment is recently introduced into the eyeglasses industry, such as U.S. patents 5416537, 5568207, 5642177, 5737054, 5975691, US 5920369 and US 6231180. For example, in U.S. patent 5568207, a primary pair of magnet members is affixed on two side extensions of a primary spectacle frame respectively. A shelter frame, such as a sunglasses, includes a pair of arms for resting over the upper side extensions for preventing the shelter frame from moving downward relative to the primary spectacle for engaging with the primary magnet members of the primary spectacle frame so as to stably attach the shelter frame to the primary spectacle frame. However, the users have to align two pairs of magnet members. If the auxiliary magnet members of the sunglasses are misaligned with the primary magnet members of the primary spectacle frame, the sunglass will fall down from the primary spectacle frame easily.

Moreover, the magnet members are firmly affixed to the spectacle frame of the primary spectacle. Once the spectacle frame is accidentally bent its shape, the shelter frame may not precisely mounted on the primary spectacle by means of the magnet attachment. Furthermore, the spectacle frame of the primary spectacle must be altered to fit the magnet members thereto such that the magnet members will destroy the aesthetic appearance of the primary spectacle.

### Summary of the Present Invention

A main object of the present invention is to provide a spectacles set which comprises a detachable shelter frame adapted for precisely and easily attaching on a primary spectacle frame by means of a magnetic engaging arrangement so as to securely mount on the primary spectacle frame without the risk of scratching the lenses of the primary spectacle frame.

Another object of the present invention is to provide a spectacles set, wherein the magnet engaging arrangement is hidden behind the nose supports of the primary spectacle frame so as to keep the aesthetic appearance of the primary spectacle frame.

Another object of the present invention is to provide a spectacles set, wherein the nose supports are adapted to be adjusted their positions with respect to the primary spectacle frame in order to fit the wearer, the wearer may still self-adjust the magnet engaging arrangement to align with the detachable shelter frame even the shape of the primary spectacle frame is slightly distorted.

Another object of the present invention is to provide a spectacles set, wherein two supporting arms of the magnetic attaching arrangement are securely mounted on a primary bridge of the primary spectacle, so as to prevent up and down movement or sideward movement of the detachable shelter frame with respect to the primary spectacle frame.

Another object of the present invention is to provide a spectacles set, wherein the wearer may merely use one hand to attach or detach the detachable shelter frame during exercising or driving.

Another object of the present invention is to provide a spectacles set, which does not require to change the original structural design of the primary spectacle frame.

Another object of the present invention is to provide a spectacles set with detachable shelter frame, wherein no magnet is needed to embed into the primary spectacle frame such that no magnetic field is generated around the primary spectacle frame to affect the wearer's health while he or she normally wears the primary spectacle frame.

Accordingly, in order to accomplish the above objects, the present invention provides a spectacles set comprising a primary spectacle frame and a detachable shelter frame adapted for mounting in front of the primary spectacle frame.

The primary spectacle frame comprises a frame body for mounting a pair of lenses in position, wherein the frame body comprises a primary bridge connected between the two lenses, two nose supports attached at two inner sides of the lenses respectively, two magnetic holders each of which has magnetic attraction ability being provided at the two nose supports respectively, and two side extensions provided at two outer sides of the lenses for coupling a pair of temples respectively.

The detachable shelter frame comprises a shelter frame for supporting two auxiliary lenses and a pair of magnetic attaching arrangements connected to the shelter frame wherein each of the magnetic attaching arrangements comprises a supporting arm extending rearwardly from an inner side of the auxiliary lens of the shelter frame towards the respective magnetic holder and a magnetic seat which is connected to the supporting arm and extended to magnetically attach the respective magnetic holder of the primary spectacle frame so as to hold the shelter frame on the primary spectacle frame in position.

Alternatively, the primary spectacle frame comprises a frame body for mounting a pair of lenses in position, wherein the frame body comprises a primary bridge connected between the two lenses, two nose supports attached at two inner sides of the lenses respectively, and two side extensions provided at two outer sides of the lenses for coupling a pair of temples respectively.

The detachable shelter frame comprises a shelter frame for supporting two auxiliary lenses and a pair of supporting arms provided at two inner sides of the auxiliary lenses for mounting the shelter frame in front of the primary spectacle frame.

Each of the supporting arms comprises a riding body, having resilient ability, extending rearwardly from the inner side of the respective auxiliary lens of the shelter frame for riding on the primary spectacle frame, and a mounting body which is connected to the riding body for pressing against a rear side of the primary spectacle frame in such a manner that the two riding bodies substantially pull the two mounting bodies towards the primary spectacle frame so as to apply an urging pressure against the primary spectacle frame for holding the frame body of the primary spectacle frame between the shelter frame and the mounting bodies, so as to securely mount the shelter frame in front of the primary spectacle frame.

### Brief Description of the Drawings

Fig. 1 is a rear perspective view of a spectacles set comprising a primary spectacle frame incorporated with a detachable shelter frame according to a preferred first embodiment of the present invention.
Fig. 2 is a partial enlarged perspective view of a magnetic attaching arrangement of the detachable shelter frame according to the above first preferred embodiment of the present invention.
Fig. 3 is a sectional view of the detachable shelter frame mounted in front of the primary spectacle frame according to the above first preferred embodiment of the present invention.
Fig. 4 is a partial enlarged perspective view of a magnetic attaching arrangement of the detachable shelter frame according to a second preferred embodiment of the present invention.
Fig. 5 is a partial rear perspective view of the detachable shelter frame mounted on the primary spectacle frame according to the above second preferred embodiment of the present invention.
Fig. 6 is a sectional view of the detachable shelter frame mounted on the primary spectacle frame according to the above second preferred embodiment of the present invention.
Fig. 7 illustrates a first alternative mode of the magnetic attaching arrangement of the detachable shelter frame according to the above second preferred embodiment of the present invention.
Fig. 8 illustrates a second alternative mode of the magnetic attaching arrangement of the detachable shelter frame according to the above second preferred embodiment of the present invention.
Fig. 9 illustrates a first alternative mode of a supporting arm of the magnetic attaching arrangement of the detachable shelter frame according to the above second preferred embodiment of the present invention.
Fig. 10A illustrates an alternative mode of the primary spectacle frame according to the above second preferred embodiment of the present invention.
Fig. 10B illustrates a second alternative mode of the supporting arm of the detachable shelter frame according to the above second preferred embodiment of the present invention.
Fig. 11 is a rear perspective view of a spectacles set according to a third preferred embodiment of the present invention.
Fig. 12 is a partial enlarged perspective view of a magnetic attaching arrangement of the detachable shelter frame according to the above third preferred embodiment of the present invention.
Fig. 13 is a top view of the spectacles set according to the above third preferred embodiment of the present invention.
Fig. 14 is a partial rear perspective view of the detachable shelter frame mounted on the primary spectacle frame according to the above third preferred embodiment of the present invention.
Fig. 15 is a partially enlarged top view of the spectacles set according to the above third preferred embodiment of the present invention.
Fig. 16 illustrates an alternative mode of the spectacles set according to the above third preferred embodiment of the present invention.
Fig. 17 illustrates an alternative mode of a clip bridge of the detachable shelter frame of the spectacles set according to the above third preferred embodiment of the present invention.
Fig. 18 is a rear perspective view of a primary spectacle frame of the spectacles set according to a fourth preferred embodiment of the present invention.

### Detailed Description of the Preferred Embodiment

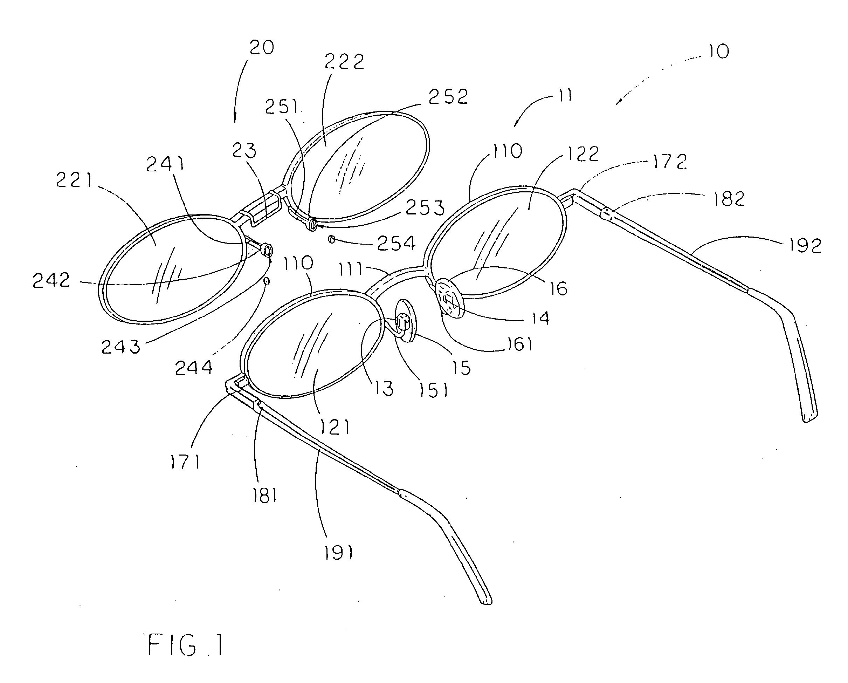

Referring to Fig. 1 of the drawings, a spectacles set according to a preferred embodiment of the present invention is illustrated, wherein the spectacles set comprises a primary spectacle frame 10 and a detachable shelter frame 20 adapted for detachably mounting in front of the primary spectacle frame 10.

The primary spectacle frame 10, such as a conventional spectacle frame, comprises a frame body 11 for mounting a pair of lenses 121, 122 in position. The frame body 11 comprises a primary bridge 111 connected between the two lenses 121, 122 respectively, two nose supports 15, 16 are attached to two inner sides of the lenses 121, 122 respectively, two magnetic holders 13, 14 each having magnetic attraction ability provided at the two nose supports 15, 16 respectively, and two side extensions 171, 172 provided at two outer sides of the lenses 121, 122 respectively wherein each of the two side extensions 171, 172 has a hinge portion 181, 182 extended rearwardly therefrom for pivotally coupling a temple 191, 192.

The frame body 11 of the primary spectacle frame 10 can be constructed as the conventional spectacle frame to have a pair of lens rims 110, as shown in Fig. 1, or the rimless frame that the primary bridge 111 and two side extensions 171, 172 are directly fastened to the edges of the two lenses 121, 122, wherein the two magnetic holders 13, 14 are extended from two ends of the primary bridge 111. In other words, the primary spectacle frame 10 does not require to modify its original structure for mounting the detachable shelter frame 20 thereon.

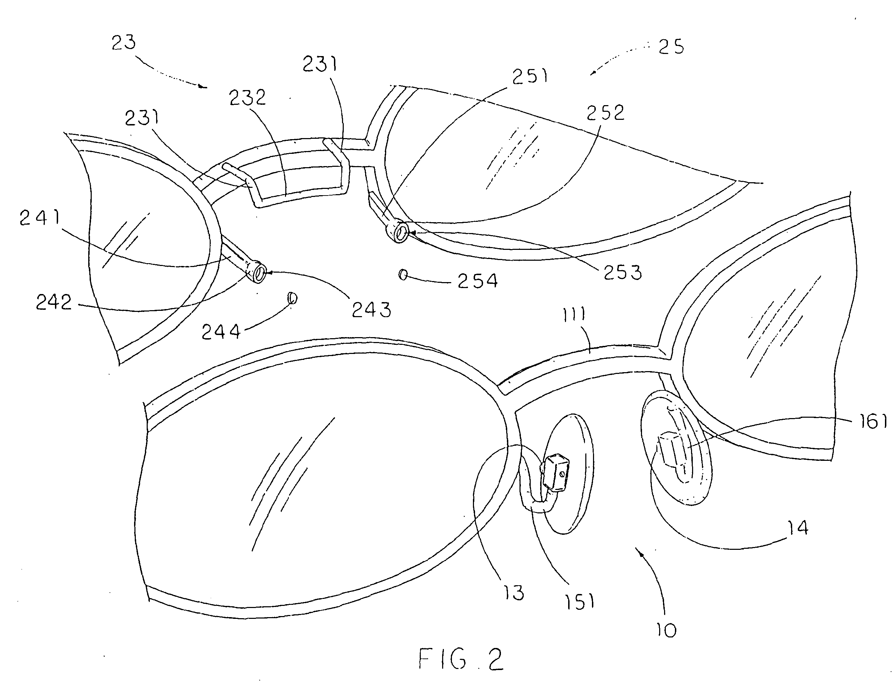

As shown in Fig. 2, each of the two nose supports 15, 16 has a U-shaped nose supporting arm 151, 161 firmly and rearwardly extended from the frame body 11 wherein each of the magnetic holders 13, 14 is provided on top of the nose supporting arm 151, 161. Each of the magnetic holders 13, 14 is made of a kind of metal having magnetic attraction ability such as mild steel, low carbon steel and high grade steel, which is attractive to magnetic material such as permanent magnet. Accordingly, each of the magnetic holders 13, 14 is firmly attached on a top end the respective nose supporting arm 151, 161 at a front side thereof, as shown in Fig. 2, in such a manner that the primary spectacle frame 10 does not require to alter its original structure in order to incorporate with the shelter frame 21 by means of magnetic engagement.

The detachable shelter frame 20 comprises a shelter frame 21 for supporting two auxiliary lenses 221, 222 comprising a clip bridge 23 extended between the two auxiliary lenses 221, 222 for securely engaging with the primary bridge 111 of the primary spectacle frame 10 and a pair of magnetic attaching arrangements 24, 25 connected to the shelter frame 21 for holding the shelter frame 21 in front of the primary spectacle frame 10 in position.

The clip bridge 23 of the shelter frame 21 of the detachable shelter frame 20 is in U-shaped and comprises two rearwardly extending side wires 231 adapted for supporting on two ends of the primary bridge 111 of the frame body 11 and a downwardly curved clipping wire 232 extending behind the primary bridge 111, so that the clip bridge 23 is securely clipped on the primary bridge 111 when the detachable shelter frame 20 is mounted in front of the primary spectacle frame 10.

As shown in Fig. 2, each of the magnetic attaching arrangement 24, 25 comprises a supporting arm 241, 251 extending rearwardly from an inner side of the auxiliary lens 221, 222 of the shelter frame 21 towards the magnetic holder 13, 14 of the primary spectacle frame 10 and a magnetic seat 242, 252 which is connected to the supporting arm 241, 242 and arranged to magnetically attach to the magnetic holder 13, 14 of the primary spectacle frame 10 so as to hold the shelter frame 21 of the detachable shelter frame 20 on the frame body 11 of the primary spectacle frame 10 in position.

Each of the magnetic seats 242, 252 comprises a magnetic housing 243, 253 rearwardly extended from the respective supporting arm 241, 251 wherein each magnetic seat 242, 252 is made of non-magnetic material or soft-magnetic metal having magnetic attraction ability such as mild steel, low carbon steel and high grade steel and a magnet 244, 254 mounted in the magnetic housing 243, 253, which is arranged to face toward and align with the respective magnetic holder 13, 14 of the shelter frame 21 when the detachable shelter frame 20 is mounted in front of the primary spectacle frame 10.

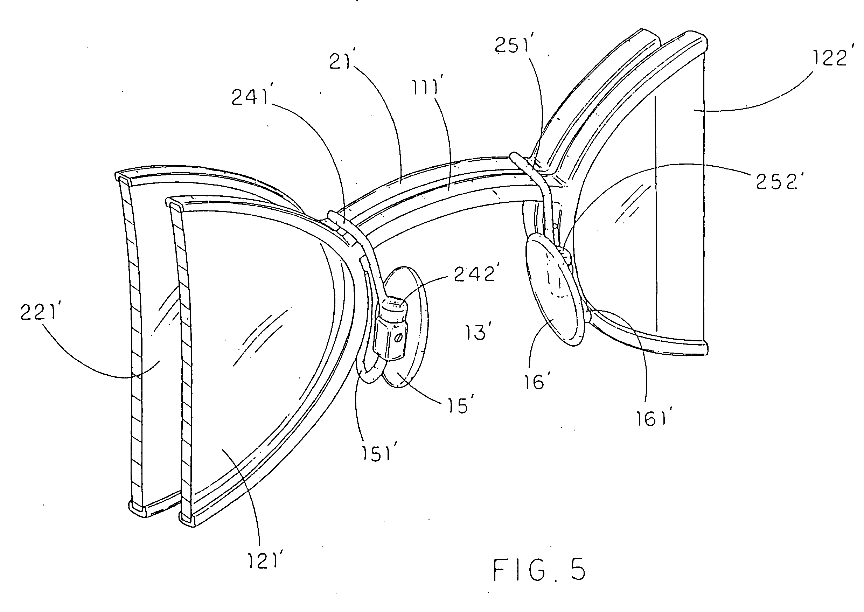

As shown in Fig. 5, the two magnetic holders 13, 14 function as two engaging members 132, 142 protruded from the nose supports 15, 16. Each magnet 244, 254 having a thickness is smaller than a depth of the respective magnetic housing 243, 253 so as to define an engaging groove 245, 255, when the magnet 244, 254 is embedded in the magnetic housing 243, 253 for fittedly engaging with the respective engaging member 132, 142. In other words, the two magnetic holders 13, 14 are received in the two engaging grooves 245, 255, so as to further guide the two magnetic attaching arrangement 24, 25 to magnetically attach to the two magnetic holder 13, 14 respectively.

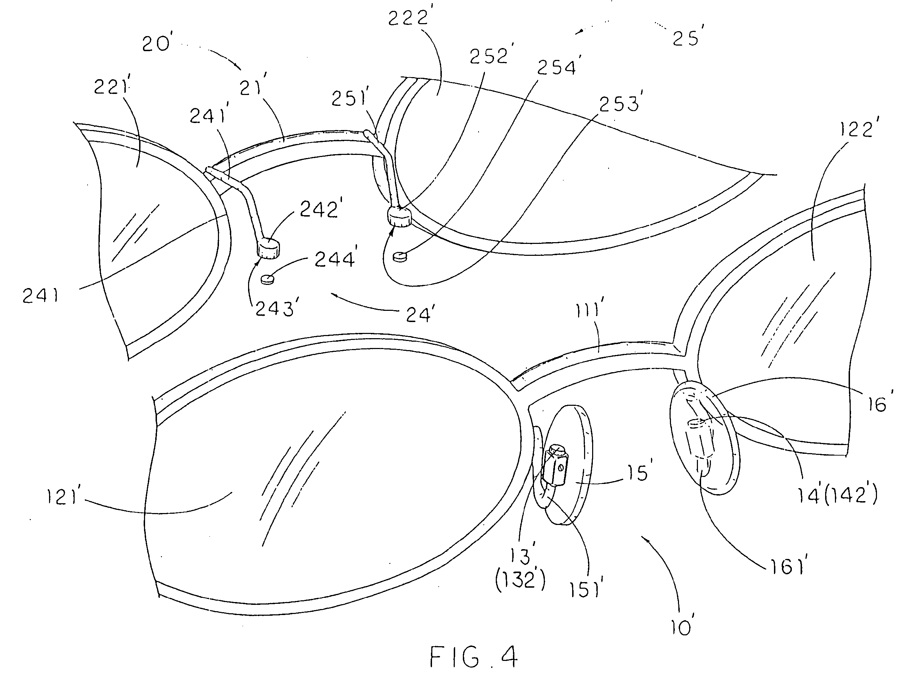

As shown in Fig. 4, a second embodiment of the spectacles set illustrates an alternative mode of the first embodiment, wherein the primary spectacle frame 10' has the same structure except the two magnetic holders 13', 14' are positioned at the top ends the nose supporting arms 151', 161' respectively.

The detachable shelter frame 20' comprises a shelter frame 21' for supporting two auxiliary lenses 221', 222' and a pair of magnetic attaching arrangements 24', 25' connected to the shelter frame 21' wherein each of the magnetic attaching arrangements 24', 25' comprises a supporting arm 241', 251' extending rearwardly from an inner side of the auxiliary lens 221', 222' of the shelter frame 21' for riding on the primary bridge 111 so as to securely mount the shelter frame 21' in front of the primary spectacle frame 10 and a magnetic seat 242', 252' which is connected to the supporting arm 241', 242' and arranged to magnetically attach to the magnetic holder 13', 14' of the primary spectacle frame 10' so as to hold the shelter frame 21' of the detachable shelter frame 20' on the frame body 11' of the primary spectacle frame 10' in position.

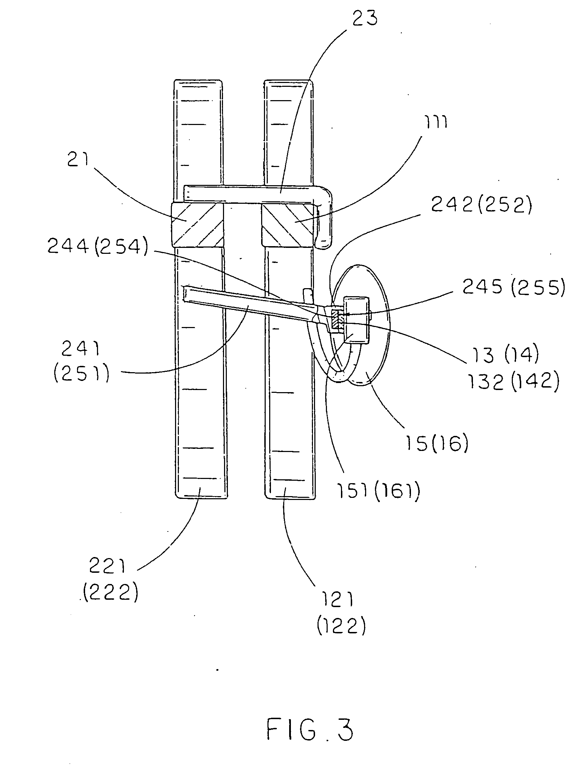

As shown in Fig. 4, each of the supporting arms 241', 251', having a L-shaped, comprises a riding body 2411', 2511' rearwardly extended from the inner side of the respective auxiliary lens 221', 222' to ride on the primary bridge 111' of the frame body 10' and a mounting body 2412', 2512' downwardly and integrally extended from a rear end of the respective riding body 2411', 2511' towards the magnetic holders 13', 14' of the primary spectacle frame 10' respectively. In other words, when the shelter frame 21' is mounted in front of the primary spectacle frame 10', the riding bodies 2411', 2511' of the supporting arms 241', 251' ride over the primary bridge 111 while the mounting bodies 2412', 2512' downwardly extend behind the primary bridge 111' and toward the magnetic holders 13', 14' respectively, so as to mount the detachable shelter frame 20' in front of the primary spectacle frame 10', as shown in Fig. 3.

The magnetic seats 242', 252' are connected to bottom ends of the mounting body 2412', 2512' of the supporting arms 241', 251' respectively to magnetically attach to the magnetic holders 13', 14' of the primary spectacle frame 10'. Accordingly, the two supporting arms 241', 251' function as a bridge clip to ride on top of the primary bridge 111' of the frame body 11' for engaging with the primary bridge 111' so as to securely interlock the shelter frame 21' in front of the primary spectacle frame 10' by preventing any upward, downward, leftward, and rightward movement of the shelter frame 21'.

Each of the magnetic seats 242', 252' comprises a magnetic housing 243', 253' downwardly and suspendedly affixed to a distal end of the respective supporting arm 241, 251' wherein each magnetic seat 242', 252' is made of non-magnetic material or soft-magnetic metal having magnetic attraction ability such as mild steel, low carbon steel and high grade steel and a magnet 244', 254' mounted in the magnetic housing 243', 253', which is arranged to face toward and align with the respective magnetic holder 13', 14' of the shelter frame 21' when the shelter frame 21' of the detachable shelter frame 20' is mounted in front of the primary spectacle frame 10'.

Moreover, as shown in Fig. 4, the magnetic holders 13', 14' function as two engaging members 132', 142' upwardly protruded from a top end of the nose supporting arms 151', 161' respectively.

Each magnet 244', 254' has a thickness smaller than a depth of the respective magnetic housing 243', 253' so as to define an engaging groove 245', 255' at a bottom end of the respective magnetic housing 243', 253', so that the magnet 244', 254' is embedded in the magnetic housing 243', 253' for fittedly engaging with the respective engaging member 132', 142'. In other words, the magnetic holders 13', 14' are received in the two engaging grooves 245', 255' respectively to further guide the two magnetic attaching arrangements 24', 25' to magnetically attach to the two magnetic holders 13', 14' respectively.

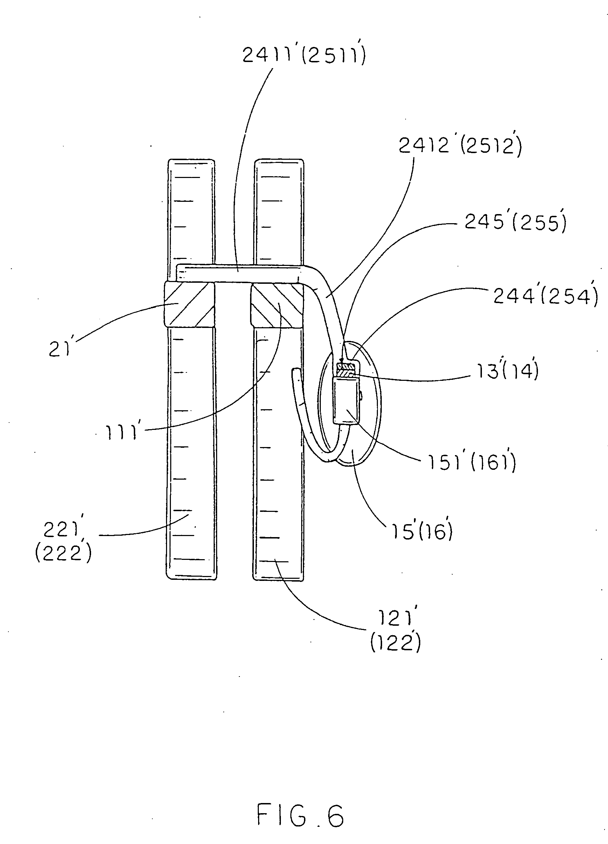

As shown in Figs. 5 and 6, when the two supporting arms 241', 251' ride over the primary bridge 111' of the frame body 11', the two magnetic seats 242', 252' will be automatically attracted by the two magnetic holders 13', 14' of the frame body 11' of the primary spectacle frame 10' respectively until the two engaging members 132', 142' are received and engaged in the engaging grooves 245', 255' respectively, so as to precisely guide the shelter frame 21' mounting in front of the primary spectacle frame 10'.

It is worth to mention that the positions of the two nose supports 15', 16' are adapted to be adjusted with respect to the frame body 11' by slightly bending the nose supporting arms 151', 161'. In other words, the two magnetic holders 13', 14' are capable of self-adjusting their positions with respect to the nose supports 15', 16' in order to guide and align the magnetic attachment between the magnetic holders 13', 14' and the magnetic seats 242', 252' respectively. Accordingly, the wearer is able to adjust the nose supports 15', 16' for not only wearing comfortably but also precisely mounting the shelter frame 21' of the detachable shelter frame 20' in front of the primary spectacle frame 10' without distorting the shape of the frame body 11'. Likewise, the wearer is able to adjust the supporting arms 241', 251' in order to align the magnetic seat 242', 252' with respect to the magnetic holders 13', 14' respectively as well.

In order to mount the shelter frame 21' in front of the primary spectacle frame 10', the user may simply use one hand to put the shelter frame 21' in front of the frame body 11' and drop it down. The supporting arms 241', 251' are securely clipped on the primary bridge 111' so as to securely interlock the shelter frame 21' with the frame body 11'. Moreover, due to the magnetic attraction, the two magnetic seats 242', 252' of the shelter frame 21' are magnetically attracted to the magnetic holders 13', 14' of the frame body 11' respectively, so as to guide the shelter frame 21' to automatically align with the primary spectacle frame 10'. So, the present invention provides not only the magnetic attraction but also the interlocking engagement for securely mounting the shelter frame 21' in front of the primary spectacle frame 10'.

The user can also detach the shelter frame 21' from the frame body 11' of the primary spectacle frame 10' easily by slightly pulling the shelter frame 21' away from the primary spectacle frame 10' until the two magnetic seats 242', 252' move upwardly apart from the two magnetic holders 13', 14', so as to release the magnetic engagement between the shelter frame 21' and the frame body 11'. Then, at the same time, the user may detach the shelter frame 21' by simply lifting it up from the primary spectacle frame 10' with one hand, so as to detach the supporting arms 241', 251' from the primary bridge 111' of the frame body 11'. In other words, the user may merely use one hand to attach or detach the detachable shelter frame 20' from the primary spectacle frame 10' especially when the user is exercising or driving that it is dangerous for him or her to user both hands to wear the detachable shelter frame.

It is worth to mention that since the magnetic holders 13', 14' are attached to the top ends of the nose supporting arms 151', 161', the magnetic holders 13', 14' are hidden behind the nose supports 15', 16' respectively such that when the shelter frame 21' is mounted in front of the primary spectacle frame 10', the magnetic attachment between the magnetic holders 13', 14' and the magnetic seats 242', 252' will not be seen so as to keep the aesthetic appearance of the primary spectacle frame 10'.

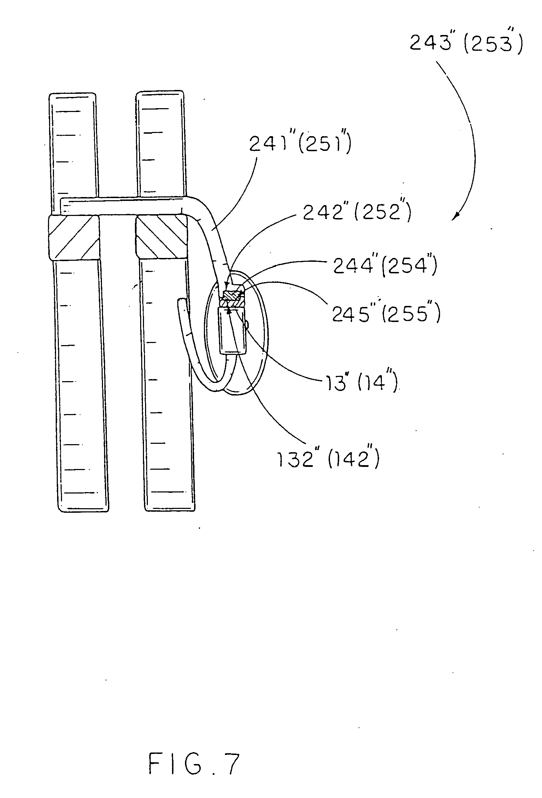

Fig. 7 illustrates a first alternative mode of the magnetic attaching arrangements 24", 25" according to the second embodiment wherein each of the magnetic attaching arrangements 24", 25" comprises a supporting arm 241", 251" extending rearwardly from an inner side of the auxiliary lens 221", 222" of the shelter frame 21" for riding on the primary bridge 111" so as to securely mount the shelter frame 21" in front of the primary spectacle frame 10" and a magnetic seat 242", 252" which is connected to the supporting arm 241", 242" and arranged to magnetically attach to the magnetic holder 13", 14" of the primary spectacle frame 10' so as to hold the shelter frame 21" of the detachable shelter frame 20" on the frame body 11" of the primary spectacle frame 10" in position.

Each of the magnetic seats 242", 252" comprises a magnetic housing 243", 253" downwardly and suspendedly affixed to a distal end of the respective supporting arm 241", 251" wherein each magnetic seat 242", 252" is made of non-magnetic material or soft-magnetic metal having magnetic attraction ability such as mild steel, low carbon steel and high grade steel and a magnet 244", 254" mounted in the magnetic housing 243", 253", which is arranged to face toward and align with the respective magnetic holder 13", 14" of the shelter frame 21" when the shelter frame 21" is mounted in front of the primary spectacle frame 10".

Each magnet 244", 254" has a thickness larger than the depth of the respective magnetic housing 243", 253" so as to define the engaging member 245", 255" at the bottom end of the respective magnetic housing 243", 253", wherein the magnet 244", 254" is embedded in the magnetic housing 243", 253" for fittedly engaging the respective engaging groove 132", 142" indented on the top end of the magnetic holder 13", 14". Therefore, when the shelter frame 21" is mounted in front of the primary spectacle frame 10", the supporting arms 241", 251" ride on the primary bridge 111" of the frame body 11". The two magnetic seats 242", 252" will be automatically attracted by the two magnetic holders 13", 14" of the frame body 11" of the primary spectacle frame 10" respectively until the two engaging members 245", 255" are received in the engaging grooves 132", 142" respectively, so as to precisely guide the shelter frame 21" mounting in front of the primary spectacle frame 10', as shown in Fig. 5.

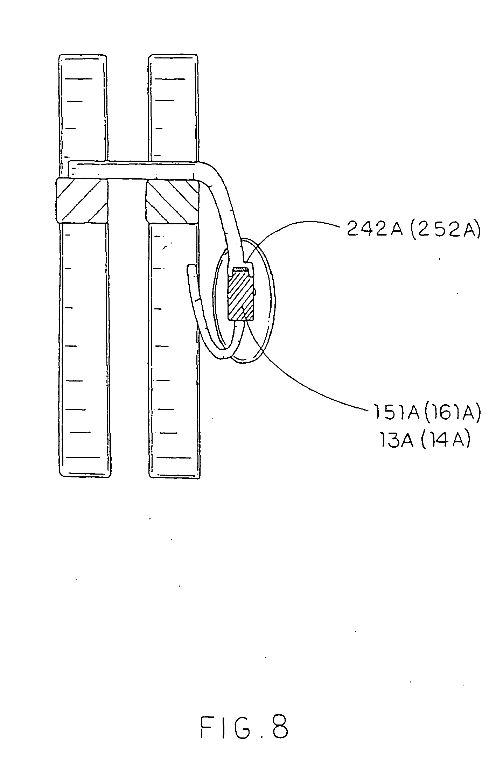

Fig. 8 illustrates a second alternative mode of the magnetic attaching arrangements 24A, 25A, wherein the magnetic holders 13A, 14A are integrally extended from the nose supports 15A, 16A respectively. Accordingly, the magnetic holders 13A, 14A are integrally extended on top of the nose supporting arms 151A, 161A respectively, wherein the nose supporting arms 151A, 161A are made of a kind of metal having magnetic attraction ability such as mild steel, low carbon steel and high grade steel, which is attractive to magnetic material, in such a manner that the magnetic seats 242A, 252A are adapted to magnetically attach to the nose supporting arms 151A, 161A of the nose supports 15A, 16A respectively for holding the shelter frame 21A in front of the primary spectacle frame 10A in position.

It is worth to mention that each of the magnetic holders 13A, 14A is adapted to have the engaging member 132', 142' as mentioned in the second preferred embodiment or to form the engaging groove 132", 142" as mentioned in the first alternative in order to fittedly engage with the magnetic seat 242A, 252A having the engaging groove 245', 255' or the engaging member 245", 255" respectively.

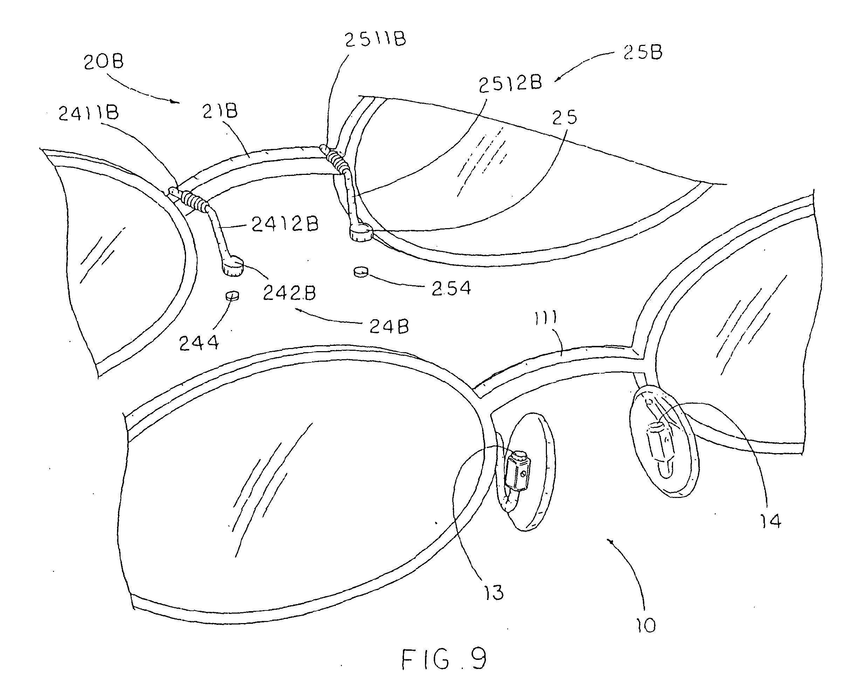

Fig. 9 illustrates a first alternative mode of the supporting arm 241B, 251B wherein each of the supporting arms 241B, 251B, having a L-shaped, comprises a riding body 2411B, 2511B rearwardly extended from the inner side of the respective auxiliary lens 221B, 222B to ride on the primary bridge 111 of the frame body 10 and a mounting body 2412B, 2512B downwardly extended from a rear end of the respective riding body 2411B, 2511B towards the magnetic holders 13, 14 of the primary spectacle frame 10 respectively.

As shown in Fig. 9, each of the riding bodies 2411B, 2511B comprises a resilient element, which is a compression spring according to the preferred embodiment, rearwardly extended from the inner side of the auxiliary lens 221B, 222B for riding on the primary bridge 111' of primary spectacle frame 10'. Accordingly, each resilient element of the riding bodies 2411B, 2511B is securely attached to the inner side of the shelter frame 21B wherein the respective mounting body 2412B, 2512B downwardly extended from a rear end of the respective riding body 2411B, 2511B to connect the respective magnetic seat 242B, 252B. In other words, the resilient element of the riding body 2411B, 2511B is extended from the inner side of the respective auxiliary lens 221B, 222B to the respective mounting body 2412B, 2512B to apply an urging pressure against the primary spectacle frame 10' for holding the frame body 11' of the primary spectacle frame 10' between the shelter frame 21B and the mounting body 2412B, 2512B.

When the shelter frame 21B is mounted in front of the primary spectacle frame 10', the riding bodies 2411B, 2511B of the supporting arms 241B, 251B are ride on the primary bridge 111' while the mounting bodies 2412B, 2512B are downwardly extended behind the primary bridge 111' towards the magnetic holders 13', 14' respectively, so as to securely mount the detachable shelter frame 20B in front of the primary spectacle frame 10'. Due to the elastic ability of the riding bodies 2411B, 2511B, the supporting arms 241B, 251B will substantially pull the shelter frame 21B towards the primary spectacle frame 10' so as to minimize a gap between the detachable shelter frame 20B and the primary spectacle frame 10'. Moreover, the mounting bodies 2412B, 2512B are adapted to be self-adjusted to magnetically attach to the magnetic holders 13', 14' respectively so as to precisely align the detachable shelter frame 20B with the primary spectacle frame 10. Likewise, the wearer is able to adjust the riding bodies 2411B, 2511B in order to adjust the positions of the mounting body 2412B, 2512B for magnetically attaching to the magnetic holders 13', 14' respectively as well.

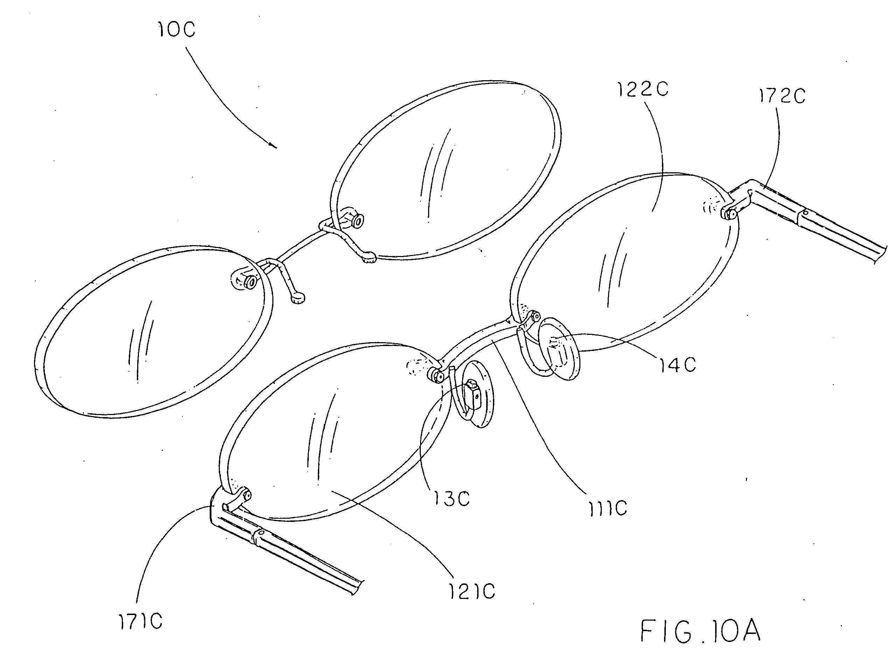

Fig. 10A illustrates an alternative mode of the primary spectacle frame 10C, wherein the attraction and engagement concept and structure of the second embodiment is same as the above embodiment. The detachable shelter frame 20C in the above embodiment and its alternative modes can also be used for mounting in front of the rimless primary spectacle frame 10C, wherein the two side extensions 171C, 172C and the primary bridge 111C are directly fastened to the edges of the two lenses 121C, 122C.

According to the second embodiment, the primary bridge 111C is connected between the two lenses 121C, 122C by means of two nuts for fastening two ends of the primary bridge 111C at two edges of the lenses 121C, 122C respectively. The two magnetic holder 13C, 14C are downwardly extended from the primary bridge 111C wherein the two magnetic holders 13C, 14C are firmly affixed to the top ends of the two nose supports 15C, 16C respectively. Each of the magnetic holders 13C, 14C is made of soft-magnetic metal having magnetic attraction ability such as mild steel, low carbon steel, and high grade steel, which is attractive to magnetic material such as permanent magnet. So, the detachable shelter frame 20C of the embodiment is also adapted for mounting on the primary spectacle frame 10C of the second embodiment as the same method as it is mentioned above.

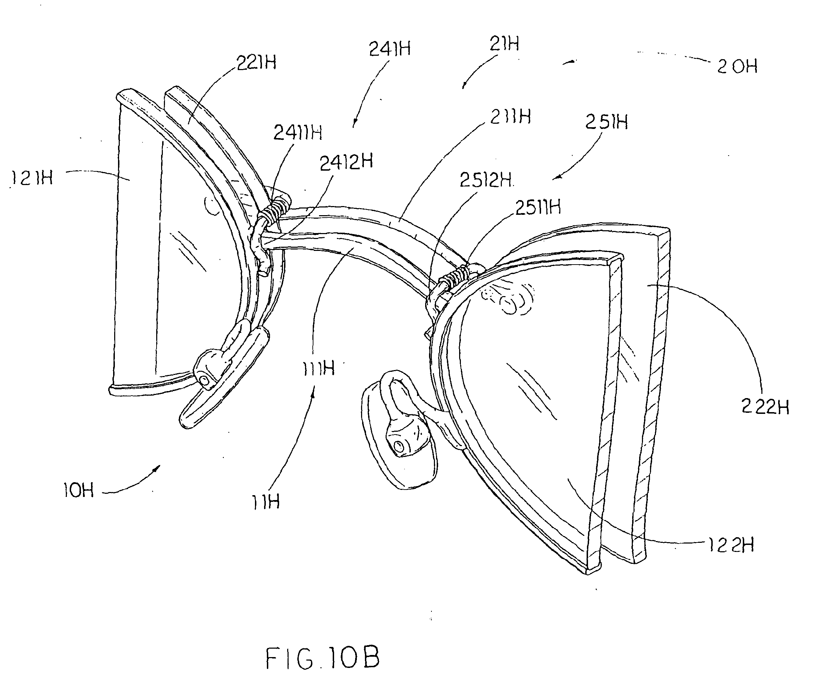

Fig. 10B illustrates a second alternative of the supporting arm 241H, 251H of the detachable shelter frame 20H wherein no magnet is required to securely mount the detachable shelter frame 20H in front of the primary spectacle frame 10H. Each of the supporting arms 241H, 251H comprises a riding body 2411H, 2511H, having resilient ability, extending rearwardly from the respective inner side of the auxiliary lens 221H, 222H of the shelter frame 21H to extend over the primary bridge 111H of the primary spectacle frame 10H, and a mounting body 2412H, 2512H which is connected to the riding body 2411H, 2511H and extended to press against a rear side of the primary spectacle frame 10H, wherein the two riding bodies 2411H, 2511H substantially pull the two mounting bodies 2412H, 2512H towards the primary spectacle frame 10H so as to apply an urging pressure against the primary spectacle frame 10H for holding the frame body 11H of the primary spectacle frame 10H between the shelter frame 21H and the mounting bodies 2412H, 2512H, so as to securely mount the detachable shelter frame 20H in front of the primary spectacle frame 10H.

As shown in Fig. 10B, the shelter frame 21H comprises a bridge 211H, having two root portions, extended between the two inner sides of the auxiliary lenses 221H, 222H of the shelter frame 21H, wherein the two riding bodies 2.411H, 2511H are extended rearwardly from the two root portions of the bridge 211H respectively and the mounting bodies 2412H, 2512H press against a rear side of two end portions of the primary bridge 111H of the primary spectacle frame 10H.

Accordingly, the two riding bodies 2411H, 2511H are compression springs rearwardly extended from the two root portions of the bridge 211H respectively, wherein each of the riding bodies 2411H, 2511H has a front end substantially connected with the respective root portion of the bridge 211H of the shelter frame 21H and a rear end connected with the respective mounting body 2412H, 2512H, wherein the two riding bodies 2411H, 2511H pull the two mounting bodies 2412H, 2512H to urge against the rear side of the primary bridge 111H and to securely engage the two mounting bodies 2412H, 2512H with the primary bridge 111H from behind so as to mount the shelter frame 21H in front of the primary spectacle frame 10H.

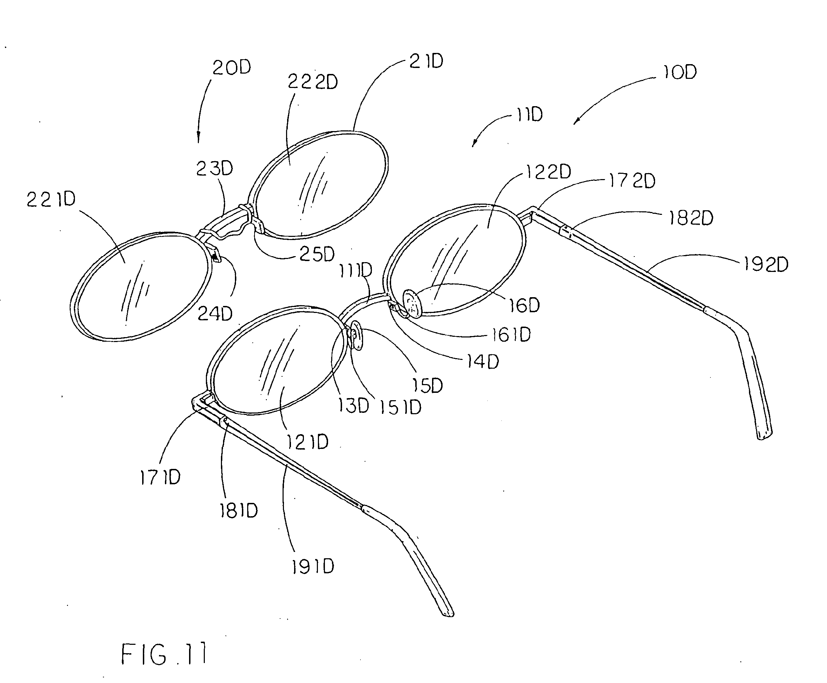

As shown in Fig. 11, a third embodiment of the spectacles set illustrates an alternative mode of the second embodiment, wherein the primary spectacle frame 10D and the detachable shelter frame 20D have the same components except the position of the magnetic attachment between the primary spectacle frame 10D and the detachable shelter frame 20D.

Each of the two nose supports 15D, 16D has a U-shaped nose supporting arm 151D, 161D extended therefrom wherein the nose supporting arm 151D, 161D is securely connected to a bottom end of the magnetic holder 13D, 14D. Each of the magnetic holders 13D, 14D is made of a kind of metal having magnetic attraction ability such as mild steel, low carbon steel and high grade steel, which is attractive to magnetic material such as permanent magnet.

The clip bridge 23D of the shelter frame 21D of the detachable shelter frame 20D is in U-shaped and further comprises two rearwardly extending side wires 231D adapted for supporting on two ends of the primary bridge 111D of the frame body 11D and a downwardly curved clipping wire 232D extending behind the primary bridge 111D, so that the clip bridge 23D is securely clipped on the primary bridge 111D when the detachable shelter frame 20D is mounted in front of the primary spectacle frame 10D.

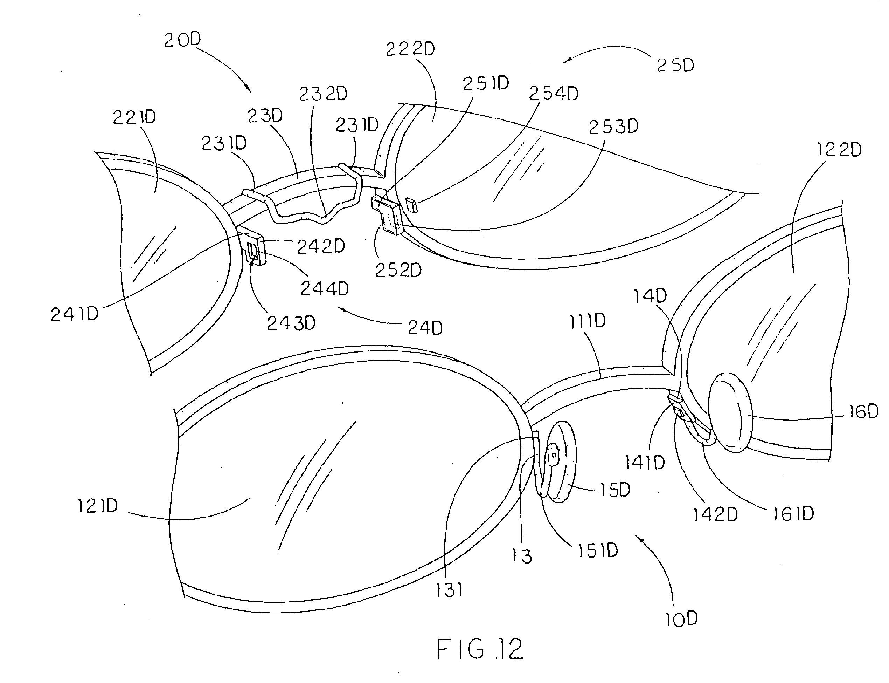

As shown in Fig. 12, each of the magnetic attaching arrangements 24D, 25D comprises a supporting arm 241D, 251D extending rearwardly from an inner side of the auxiliary lens 221D, 222D of the shelter frame 21D towards the magnetic holder 13D, 14D of the primary spectacle frame 10D and a magnetic seat 242D, 252D which is connected to the supporting arm 241D, 242D and arranged to magnetically attach to the magnetic holder 13D, 14D of the primary spectacle frame 10D so as to hold the shelter frame 21D on the frame body 11D of the primary spectacle frame 10D in position.

Each of the magnetic seats 242D, 252D comprises a magnetic housing 243D, 253D rearwardly extended from the respective supporting arm 241D, 251D wherein each magnetic seat 242D, 252D is made of non-magnetic material or soft-magnetic metal having magnetic attraction ability such as mild steel, low carbon steel and high grade steel and a magnet 244D, 254D mounted in the magnetic housing 243D, 253D, which is arranged to face toward and align with the respective magnetic holder 13D, 14D of the shelter frame 21D when the detachable shelter frame 20D is mounted in front of the primary spectacle frame 10D.

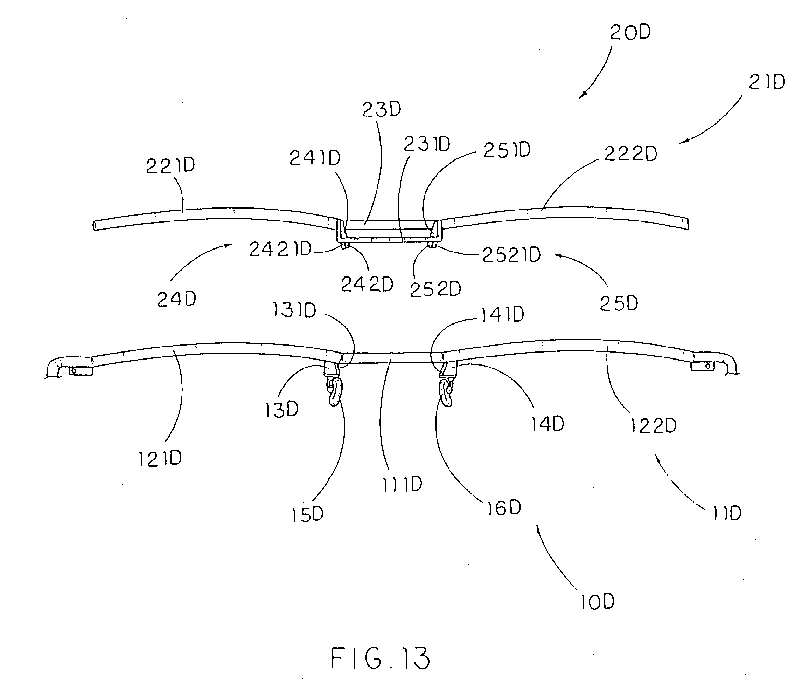

According to Fig. 13, the two supporting arms 241D, 251D are inwardly extended from the shelter frame 21D of the detachable shelter frame 20D in such a manner that the two magnetic seats 242D, 252D are easy to align with the magnetic holders 13D, 14D when the detachable shelter frame 20D is mounted in front of the primary spectacle frame 10D. In other words, a distance between the two auxiliary lenses 221D, 222D where the two supporting arms 241D, 251D extended therefrom is wider than a distance between the two magnetic holders 13D, 14D of the frame body 11D of the primary spectacle frame 10D.

Each of the magnetic seats 242D, 252D has an outer surface 2421D, 2521D adapted for fittedly engaging with an inner surface 131D, 141D of the respective magnetic holder 13D, 14D when the magnetic seats 242D, 252D are magnetically engaged with the magnetic holders 13D, 14D respectively. The outer surfaces 2421D, 2521D of the magnetic seats 242D, 252D are slanted outwardly for fittedly engaging with the inner surfaces 131D, 141D of the magnetic holders 13D, 14D which are slanted inwardly, as shown in Fig. 13. Since the detachable shelter frame 20D is mounted in front of the primary spectacle frame 10D, the slanted outer surfaces 2421D, 2521D of the two magnetic seats 242D, 252D and the slanted inner surfaces 131D, 141D of the magnetic holders 13D, 14D will guide and enhance the engagement and the alignment between the magnetic seats 242D, 252D and the magnetic holders 13D, 14D, so as to mount the detachable shelter frame 20D in front of the primary spectacle frame 10D easily.

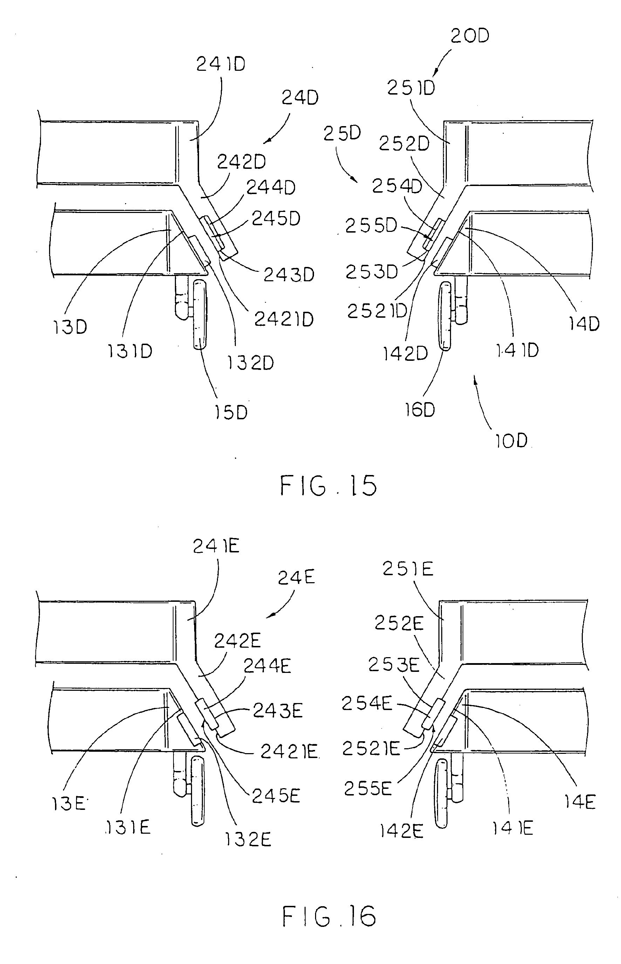

Moreover, as shown in Fig. 15, two engaging members 132D, 142D are integrally protruded from the two slanted inner surfaces 131D, 141D of the magnetic holders 13D, 14D respectively in such a manner that the two engaging members 132D, 142D are also made of soft magnetic metal which is attractive to magnetic material such as permanent magnet. Each magnet 244D, 254D has a thickness smaller than a depth of the respective magnetic housing 243D, 253D so as to define an engaging groove 245D, 255D, so that the magnet 244D, 254D is embedded in the magnetic housing 243D, 253D for fittedly engaging with the respective engaging member 132D, 142D. In other words, the two engaging grooves 245D, 255D are formed on the two outer surfaces 2421D, 2521D of the two magnetic seats 242D, 252D for fittedly engaging with the two engaging members 132D, 142D of the two inner surfaces 131D, 141D of the two magnetic holders 13D, 14D respectively, so as to further guide the two magnetic attaching arrangement 24D, 25D to magnetically attach to the two magnetic holder 13D, 14D respectively.

Alternatively, each magnet 244E, 254E has a thickness larger than the depth of the respective magnetic housing 243E, 253E so as to define the engaging member 245E, 255E on the slanted outer surface 2421E, 2521E, wherein the magnet 244E, 254E is embedded in the magnetic housing 243E, 253E for fittedly engaging the respective engaging groove 132E, 142E indented on the slanted inner surface 131E, 141E of the magnetic holder 13E, 14E, as shown in Fig. 16.

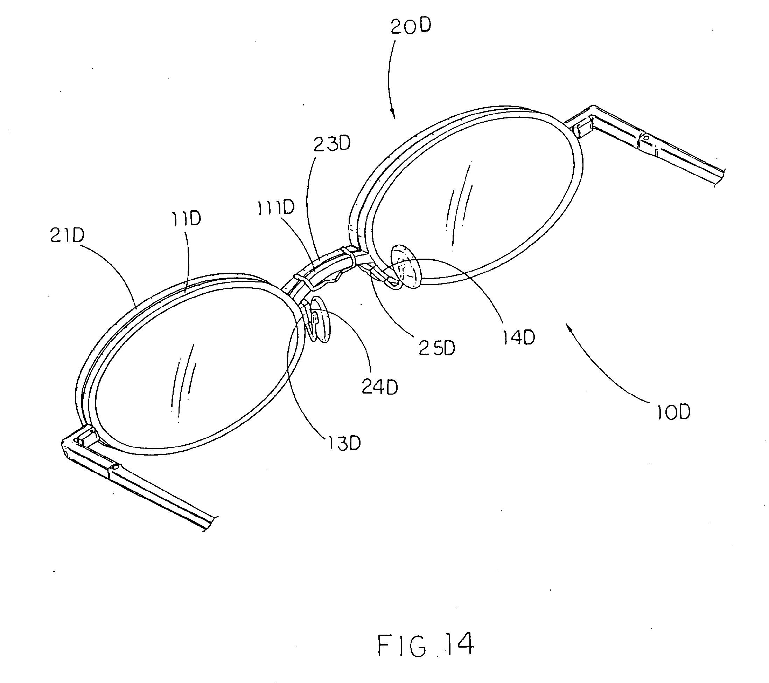

In order to mount the detachable shelter frame 20D in front of the primary spectacle frame 10D, the user may simply use one hand to put the shelter frame 21D in front of the frame body 11D and drop it down. The clip bridge 23D is securely clipped on the primary bridge 111D so as to securely interlock the shelter frame 21D with the frame body 11D. Moreover, due to the magnetic attraction, the two magnetic seats 242D, 252D of the shelter frame 21D are magnetically attracted to the magnetic holders 13D, 14D of the frame body 11D respectively. The inwardly extending supporting arms 241D, 251D further guide the two magnetic seats 242D, 252D to automatically align with the two magnetic holders 13D, 14D respectively in such a manner that the slanted outer surfaces 2421D, 2521D of the two magnetic seats 242D, 252D are magnetically engaged with the slanted inner surfaces 131D, 141D of the magnetic holders 13D, 14D, so as to hold the shelter frame 21D on the frame body 11D in position, as shown in Fig. 14. So, the present invention provides not only the magnetic attraction but also the interlocking engagement for securely mounting the detachable shelter frame 20D in front of the primary spectacle 10D.

The user can also detach the shelter frame 21D of the detachable shelter frame 20D from the frame body 11D of the primary spectacle frame 10D easily by slightly pulling the shelter frame 21D away from the primary spectacle frame 10D until the two magnetic seats 242D, 252D move frontwardly apart from the two magnetic holders 13D, 14D, so as to release the magnetic engagement between the shelter frame 21D and the frame body 11D. Then, at the same time, the user may detach the shelter frame 21D by simply lifting it up from the primary spectacle frame 10D with one hand, so as to detach the clip bridge 23D from the primary bridge 111D of the frame body 11D. In other words, the user may merely use one hand to attach or detach the detachable shelter frame 20D from the primary spectacle frame 10D especially when the user is exercising or driving that it is dangerous for him or her to user both hands to wear the detachable sunglasses as the detachable shelter frame 20D.

It is worth to mention that since the two nose supports 15D, 16D are affixed to the bottom ends of the magnetic holders 13D, 14D respectively, the two supporting arms 241D, 251D can extended near to the magnetic holders 13D, 14D, so as to minimize a distance between the detachable shelter frame 20D and the primary spectacle frame 10D.

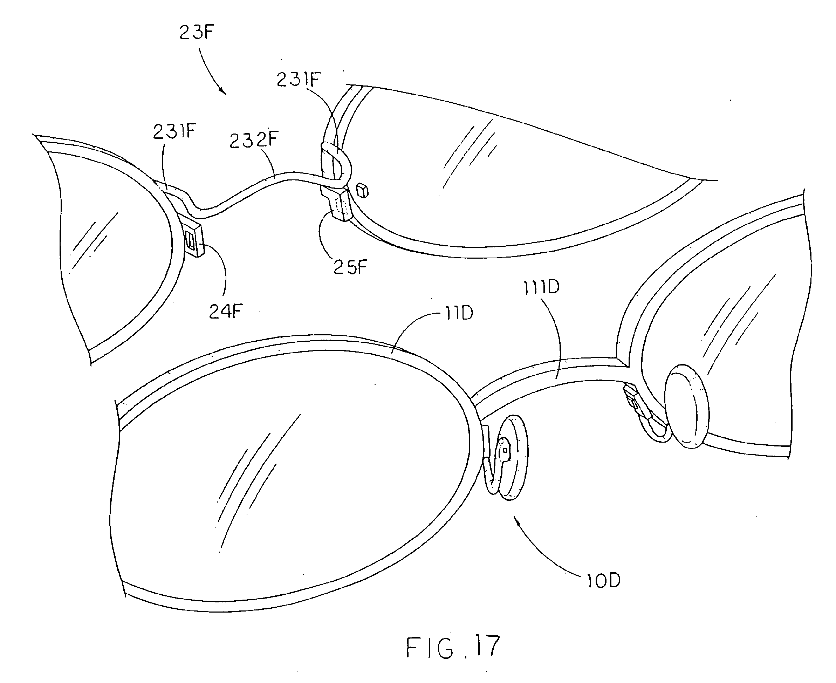

As shown in Fig. 17, an alternative mode of the clip bridge 23F of the detachable shelter frame 20F is illustrated, wherein the structure of the magnetic attaching arrangement 24F, 25F of the detachable shelter frame 20E are the same as mentioned above. The clip bridge 23F comprises two rearwardly extending side wires adapted for supporting on two ends of the primary bridge 111D of the frame body 11D and a W-shaped downwardly curved wire 232F extending behind the primary bridge 111D, so that the clip bridge 23F is adapted for clipping on the primary bridge 111D when the detachable shelter frame 20F is mounted in front of the primary spectacle frame 10D.

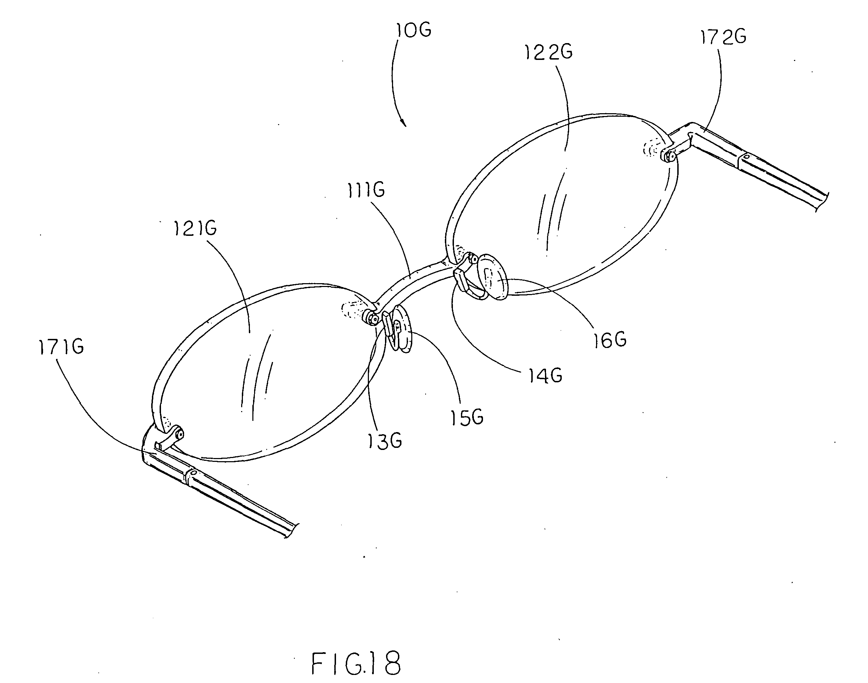

Referring to Fig. 18, a primary spectacle frame 10G according to a fourth preferred embodiment of the present invention is illustrated, wherein the attraction and engagement concept and structure of the spectacles set is same as the above third embodiment. The detachable shelter frame 10D in the above third embodiment and its alternative mode can also be used for mounting in front of the rimless primary spectacle frame 10G of the fourth embodiment, wherein the two side extensions 171G, 172G and the primary bridge 111G are directly fastened to the edges of the two lenses 121G, 122G.

According to the fourth embodiment, the primary bridge 111G is connected between the two lenses 121G, 122G by means of two nuts for fastening two ends of the primary bridge 111G at two edges of the lenses 121G, 122G respectively. The two magnetic holder 13G, 14G are downwardly extended from the primary bridge 111G wherein the two nose supports 15G, 16G are firmly affixed to bottom ends of the two magnetic holders 13G, 14G respectively. Each of the magnetic holders 13G, 14G is made of soft-magnetic metal having magnetic attraction ability such as mild steel, low carbon steel, and high grade steel, which is attractive to magnetic material such as permanent magnet. So, the detachable shelter frame 20D of the third embodiment is also adapted for mounting on the primary spectacle frame 10G of the fourth embodiment as the same method as it is mentioned above.

Since the primary spectacle frame according to the embodiments and their alternatives do not employed with any magnet, no magnetic field is produced around the primary spectacle frame so that the user is able to wear the primary spectacle frame as usually without affecting by the magnetic field. Thus, both the interlocking engagement and the magnetic attraction are provided by the present invention in order to securely mount the detachable shelter frame in front of the primary spectacle frame.

While the foregoing description and diagram describe the preferred embodiment and its alternatives, it should be appreciated that certain obvious modifications, variations, and substitutions may be made without departing from the spirit and scope of the present invention, such as the shape and size of the magnetic seat and the magnetic holder. Moreover, the magnets can be provided at the magnetic holders respectively while the magnetic seats are made of non-magnetic material or soft-magnetic metal having magnetic attraction ability so as to enhance the magnetic engagement between the shelter frame and the primary spectacle frame.

## Claims

1. A spectacles set, comprising a primary spectacle frame (10') and a detachable shelter frame constructed for mounting in front of said primary spectacle frame;
said primary spectacle frame (10') comprising a frame body (11') for mounting a pair of lenses (121', 122') in position, wherein said frame body (11') comprises a primary bridge (111') connected between said two lenses (121', 122'), two nose supports (15', 16') attached at two inner sides of said lenses (121', 122') respectively, and two side extensions provided at two outer sides of said lenses (121', 122') for coupling a pair of temples respectively;
said detachable shelter frame comprising a shelter frame (21') for supporting two auxiliary lenses (221', 222') and a pair of supporting arms (241', 251') provided at two inner sides of said auxiliary lenses (221', 222') for mounting said shelter frame (10) in front of said primary spectacle frame (20), wherein each of said supporting arms (241', 251') comprises:
a riding body (2411', 2512'), having resilient ability, extending rearwardly from said inner side of said respective auxiliary lens (221', 222') of said shelter frame (21') for riding on said primary spectacle frame (10'); and
a mounting body (2412', 2512') which is connected to said riding body (2411', 2511') for pressing against a rear side of said primary spectacle frame (10') in such a manner that said two riding bodies (2411', 2511') substantially pull said two mounting bodies (2412', 2512') towards said primary spectacle frame so as to apply an urging pressure against said primary spectacle frame (10') for holding said frame body of said primary spectacle frame between said shelter frame (21') and said mounting bodies (2412', 2512'), so as to securely mount said shelter frame in front of said primary spectacle frame (10').

2. The spectacle set, as recited in claim 1, wherein said shelter frame comprises a bridge (111'), having two root portions, extended between said two inner sides of said auxiliary lenses (221', 222') of said shelter frame (11'), wherein said two riding bodies (2411', 2511') are extended rearwardly from said two root portions of said bridge (111') respectively and said mounting bodies (2412', 2512') press against said rear side of two end portions of said primary bridge (111') of said primary spectacle frame (10').

3. The spectacle set, as recited in claim 2, wherein said two riding bodies (2411', 2511') are compression springs rearwardly extended from said two root portions of said bridge (211') respectively, wherein each of said riding bodies (2411', 2511') has a front end securely connected with said respective root portion of said bridge (211') of said shelter frame (20') and a rear end connected with said respective mounting body (2412', 2512'), wherein said two riding bodies (2411', 2511') pull said two mounting bodies (2412', 2512') to urge against said rear side of said primary bridge (111') and to securely engage said two mounting bodies (2412', 2512') with said primary bridge (111') from behind so as to mount said shelter frame (20') in front of said primary spectacle frame (10').
